(19) Europäisches Patentamt
European Patent Office
Office européen des brevets

(11) Publication number: 0 051 384 A1

# (12) EUROPEAN PATENT APPLICATION

(21) Application number: 81304898.0

(22) Date of filing: 20.10.81

(51) Int. Cl.[3]: C 08 G 77/20
C 08 G 77/12, C 08 L 83/04
C 09 D 3/00, C 09 D 3/82
D 21 H 1/40

(30) Priority: 31.10.80 US 202527

(43) Date of publication of application: 12.05.82 Bulletin 82/19

(84) Designated Contracting States: BE DE FR GB IT SE

(71) Applicant: DOW CORNING CORPORATION
Midland Michigan 48640(US)

(72) Inventor: Blizzard, John Donald
1000 N. Hampton
Bay City Michigan 48706(US)

(72) Inventor: Swihart, Terence John
1544 St. Mary's Court
Essexville Michigan 48732(US)

(74) Representative: Lewin, John Harvey et al,
Elkington and Fife High Holborn House 52/54 High Holborn
London WC1V 6SH(GB)

## (54) Accelerated inhibited platinum-catalyzed organosilicon compositions.

(57) Organopolysiloxane compositions are disclosed which are reactive by way of a platinum-catalyzed hydrosilylation reaction which is inhibited for hours at room temperature but which proceeds readily at temperatures as low as 180°F. This is accomplished by mixing a reaction-inhibitor component and a reaction-accelerator component with the reactive composition. Paper-coating compositions having a long room temperature pot life and a short cure time at 180°F are disclosed.

EP 0 051 384 A1

# ACCELERATED INHIBITED PLATINUM-CATALYZED ORGANOSILICON COMPOSITIONS

## Background of the Invention

The present invention relates to improved organopolysiloxane compositions which are reactive by way of a platinum-catalyzed hydrosilylation reaction. More specifically, the present invention relates to said compositions having a slow hydrosilylation reaction rate at room temperature and a fast hydrosilylation reaction rate at moderately elevated temperature. In a preferred embodiment this invention relates to organopolysiloxane coating compositions which are curable by way of a platinum-catalyzed hydrosilylation reaction that provides a long room-temperature gel time and a short cure time at elevated temperature and to a method of coating a substrate therewith.

Hydrosilylation is a well-known and useful reaction in the organosilicon art. It is useful for synthesizing organosilanes and organosiloxanes and for curing organosiloxane compositions, such as coating, sealing, encapsulating or molding compositions.

Briefly, hydrosilylation comprises an addition reaction between a silicon-bonded hydrogen radical and an olefinic linkage according to the following simplified reaction.

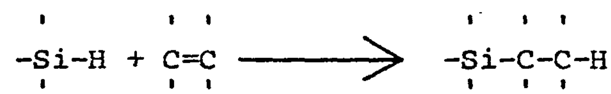

Tne rate of this hydrosilylation reaction is typically increased by the incorporation of a catalyst, such as a platinum-type catalyst in the reaction mixture.

However, for many applications involving liquid organosiloxane compositions which cure to a coherent solid form, the use of a platinum-containing catalyst provides an excessive rate of hydrosilylation at room temperature so that the curable composition thickens, gels, or even cures, to an unusable form before it can be completely configured i.e. positioned and/or shaped during its intended use.

Several methods have been developed for controlling the rate of a platinum-catalyzed hydrosilylation reaction; however, the preferred method comprises moderating the activity of the hydrosilylation catalyst by adding a catalyst inhibitor, such as certain acetylenic compounds (U.S. Patent No. 3,445,420 issued May 20, 1969, to Kookootsedes and Plueddemann), benzotriazole (U.S. Patent No. 3,192,181 issued June 29, 1965, to Moore) or certain halohydrocarbons (U.S. Patent No. 3,383,356 issued May 14, 1968, to Nielsen), to the curable composition at some time before all components necessary for the reaction are brought together.

This method of hydrosilylation control, although being very effective, is not completely satisfactory because it is necessary to heat the inhibited composition to a high temperature, for example 300°F, to achieve a short cure time, for example 30 seconds. Considerably longer cure times are required at lower temperatures.

High curing temperatures are undesirable from an energy-expenditure viewpoint; they are frequently not permitted in many processes where the composition to be cured is in close proximity to a temperature-sensitive material.

Long cure times are undesirable from an economic viewpoint; they are frequently not permitted in a fast-paced process that uses the curable composition.

High curing temperatures and long cure times are particularly undesirable in the paper-coating art wherein a curable coating composition is prepared, is coated onto paper over a period of time and then is cured. During this process the curable organosiloxane coating composition must have a long pot life, i.e. it must not gel, or even thicken appreciably, before it has been applied to the paper. It is therefore inhibited, as noted above. The nature of the substrate precludes high curing temperatures. The

nature of the process, which frequently is a fast, continuous process comprising further processing steps after the coating composition is cured, such as rolling, stacking or further coating steps, precludes long cure times. Currently, a compromise process involving moderate curing temperatures and moderate cure times is used.

An organosiloxane coating composition is needed which has a long gel time at room temperature and a short cure time at slightly elevated temperature, for example 180°F.

Such a composition could be prepared and then used over a period of time at room temperature without thickening and yet would rapidly cure when heated. The coatings industry, particularly the paper-coatings industry, would benefit greatly from such a composition. Other arts, such as the encapsulating art and the silicone fabricating art, would also be aided.

## Summary of the Invention

It is an object of this invention to provide organosiloxane compositions which react by way of a platinum-catalyzed hydrosilylation reaction which is inhibited at room temperature but not at moderately elevated temperature. It is a particular object of this invention to provide substantially solventless, heat-curable organopolysiloxane coating compositions which have a long room-temperature gel time and a short cure time when they are applied to a substrate and heated at 180°F.

These objects, and others which will become apparent upon considering the following disclosure and appended claims, are met by the present invention which comprises mixing an organopolysiloxane composition bearing at least two olefinically unsaturated radicals, an organohydrogenpolysiloxane composition bearing at least two silicon-bonded hydrogen radicals, a catalytic amount of a platinum-containing hydrosilylation catalyst, an effective amount of a platinum-catalyst inhibitor and an effective amount of a halohydrocarbon accelerator.

It was completely unexpected that certain halohydrocarbons, while having substantially no effect on the rate of an uninhibited hydrosilylation reaction, would substantially increase the rate of an inhibited hydrosilylation reaction at elevated temperature without substantially increasing the rate of the inhibited hydrosilylation reaction at room temperature.

## Detailed Description of the Invention

Broadly stated, the compositions of this invention are improved organopolysiloxane compositions which are reactive by way of a platinum-catalyzed hydrosilylation reaction of silicon-bonded aliphatically unsaturated radicals with silicon-bonded hydrogen radicals, the improvement comprising mixing therewith an inhibitor component to decrease the rate of the hydrosilylation reaction at room temperature and an accelerator component to increase the rate of the inhibited hydrosilylation reaction at elevated temperature.

Specifically, the present invention relates to the preparation of a reactive composition by mixing components comprising (a) an organopolysiloxane component having from 1 to 3 organic radicals per silicon atom, the organic radicals of which are independently selected from the group consisting of hydrocarbon radicals and substituted hydrocarbon radicals, an average of at least two of said organic radicals per molecule of said organopolysiloxane bearing aliphatic unsaturation which is reactive in a platinum-catalyzed hydrosilylation reaction, (b) an organohydrogenpolysiloxane component having up to 2 organic radicals per silicon atom, the organic radicals of which are free of aliphatic unsaturation and are independently selected from the group consisting of hydrocarbon radicals and substituted hydrocarbon radicals, there being an average of at least two silicon-bonded hydrogen radicals per molecule of said organohydrogenpolysiloxane which are reactive in a platinum-catalyzed hydrosilylation reaction, (c) a platinum-containing component in sufficient amount to catalyze a hydrosilyation reaction of said aliphatically unsaturated radicals with said silicon-bonded hydrogen radicals, (d) an inhibitor component in sufficient amount to decrease the rate of the catalyzed hydrosilylation reaction at room temperature, and (e) an accelerator component in

sufficient amount to increase the rate of the inhibited hydrosilylation reaction at 180°F, said accelerator component being selected from the group consisting of saturated halohydrocarbons having an atmospheric boiling point of from 75°F to 250°F; and to a method comprising configuring said composition into a desired configuration and heating the configured composition to accelerate said hydrosilylation reaction.

In a preferred embodiment, the present invention relates to the preparation of a curable coating composition by mixing components comprising (a) an organopolysiloxane component having the formula $(CH_2{=}CH)(CH_3)(R')SiO[(CH_3)_2SiO]_a[(CH_2{=}CH)(CH_3)SiO]_b$-$Si(R')(CH_3)(CH{=}CH_2)$ wnerein each R' denotes, independently, a methyl radical or a phenyl radical, a denotes a number having an average value of from 40 to 600 and b denotes a number having an average value of from 0 to 0.1a, (b) an organohydrogenpolysiloxane component consisting essentially of at least 40 percent by weight of an organohydrogenpolysiloxane having the formula $(CH_3)_3SiO[(CH_3)(H)SiO]_cSi(CH_3)_3$ wherein c denotes a number having an average value of from 30 to 70, the remainder of said organohydrogenpolysiloxane component consisting essentially of an organohydrogenpolysiloxane having the formula $(CH_3)_3SiO[(CH_3)_2SiO]_d[(CH_3)(H)SiO]_eSi(CH_3)_3$ wherein d denotes a number having an average value of approximately 3 and e denotes a number having an average value of approximately 5, (c) a platinum-containing component comprising the reaction product of $H_2PtCl_6 \cdot 6H_2O$ with $[(CH_2{=}CH)(CH_3)_2Si]_2O$, said

platinum-containing component being present in sufficient amount to provide from 50 to 250 parts by weight of platinum for every one million parts by weight of the organopolysiloxane component (a), (d) an inhibitor component in sufficient amount to increase the room-temperature gel time of the mixture of components (a) plus (b) plus (c), and (e) an accelerator component in sufficient amount to decrease the cure time of the mixture of components (a) plus (b) plus (c) plus (d) at 180°F., said accelerator component being selected from the group consisting of saturated halohydrocarbons having an atmospheric boiling point of from 70°F to 250°F., there being in the resulting mixture from 0.9 to 2.1 silicon-bonded hydrogen radicals for every silicon-bonded vinyl radical; and to a method comprising applying said composition to a substrate and heating the applied composition to cure said applied composition.

Component (a) of the compositions of this invention can be any organopolysiloxane having from 1 to 3 organic radicals per silicon atom. The organic radicals are each independently selected from the group consisting of hydrocarbon radicals and substituted hydrocarbon radicals. An average of at least two of said organic radicals, per molecule of organopolysiloxane component (a), are aliphatically unsaturated radicals which are reactive in a platinum-catalyzed hydrosilylation reaction. The remaining organic radicals in the organopolysiloxane component (a) are free of aliphatic unsaturation.

Examples of suitably reactive aliphatically unsaturated hydrocarbon radicals which can be present in component (a) include alkenyl radicals, such as $CH_2=CH-$, $CH_2=CHCH_2-$, $CH_3CH=CHCH_2-$, $CH_2=C(CH_3)CH_2-$ and $CH_2=CHC(CH_3)_2-$; alkenyloxy radicals, such as $CH_2=CHC(CH_3)_2O-$; alkenylene radicals, such as $-CH_2CH=CHCH_2-$ and $-CH=CHCH_2CH_2-$; and others, such as $CH_2=C(CH_3)CO_2CH_2CH_2CH_2-$ and cyclohexenyl.

Examples of hydrocarbon radicals present in component (a) which are free of aliphatic unsaturation include monovalent hydrocarbon radicals such as alkyl radicals; such as methyl, ethyl, isopropyl, hexyl, octadecyl and myricyl; aryl radicals, such as phenyl, tolyl, xylyl, zenyl, naphthyl and anthracyl; arylalkyl radicals, such as benzyl, styryl, alpha-methylstyryl and tolylpropyl; and cycloaliphatic radicals; such as cyclohexyl and cyclopentyl and polyvalent hydrocarbon radicals, such as methylene, ethylene, propylene, octadecylene, phenylene, tolylene, xenylene, naphthylene, isopropylidene and cyclohexylene. Polyvalent hydrocarbon radicals can be bonded to one silicon atom or to more than one silicon atom.

Examples of substituted hydrocarbon radicals included in component (a) include the above-delineated hydrocarbon radicals substituted with halogen radicals; such as fluorine-substituted radicals, such as 3,3,3-trifluoropropyl and trifluoromethylphenyl, and chlorine-substituted radicals, such as 3-chloropropyl and trichlorophenyl; with ether linkages, such as polyaryalkylene radicals, such as $-CH_2CH_2CH_2(OG)_nOX$, wherein G denotes $-CH_2CH_2-$ and/or

$-CH_2CH(CH_3)-$, n is a positive integer and X denotes an endblocking radical, such as alkyl, acyl and aryl; and with any other substitutent which does not poison the platinum-containing catalyst, such as $-CO_2CH_2CH_3$, $-CONH_2$, $-CH-CH_2O$ and $-NO_2$ substituting radicals.

Organopolysiloxane component (a) consists of siloxane units selected from the group consisting of $R_3SiO_{1/2}$, $R_2SiO_{2/2}$, $RSiO_{3/2}$ and $SiO_{4/2}$ wherein each R denotes independently a hydrocarbon radical or a substituted hydrocarbon radical delineated above. Preferred siloxane units include $Me_3SiO_{1/2}$, $PhMe_2SiO_{1/2}$, $ViMe_2SiO_{1/2}$, $ViPhMeSiO_{1/2}$, $BnMeSiO_{1/2}$, $Me_2SiO_{2/2}$, $MeViSiO_{2/2}$, $MePhSiO_{2/2}$, $Ph_2SiO_{2/2}$, $ViPhSiO_{2/2}$, $BnSiO_{2/2}$, $ViSiO_{3/2}$, $MeSiO_{3/2}$, $PhSiO_{3/2}$ and $SiO_{4/2}$ siloxane units. Herein Me, Vi, Ph and Bn denote the methyl, vinyl, phenyl and butenylene ($-CH_2CH=CHCH_2-$ or $-CH_2CH_2CH=CH-$) radical, respectively.

Organopolysiloxane component (a) is preferably a linear polydiorganosiloxane having the formula $R_3SiO(R_2SiO)_xSiR_3$ wherein an average of at least two siloxane units per molecule bear an aliphatically unsaturated organic radical which is reactive in a platinum-catalyzed hydrosilylation reaction and x denotes a positive integer.

For coating compositions the organopolysiloxane component (a) is preferably a linear polydiorganosiloxane having the formula $(CH_2=CH)(CH_3)(R')SiO[(CH_3)_2SiO]_a[(CH_2=CH)(CH_3)]_b-Si(R')(CH_3)(CH=CH_2)$ wherein each R' denotes independently a methyl radical or phenyl radical, a denotes a number having an average value of from 40 to 600 and b denotes a number having an average value of from 0 to 0.1a.

Organopolysiloxanes bearing aliphatically unsaturated radicals and methods for their preparation are well known in the organosilicon art and need no further delineation herein; many are commercially available. The practioner of average skill in the organosilicon polymer art knows or can easily determine how to prepare these organopolysiloxanes.

Component (b) of the compositions of this invention can be any organohydrogenpolysiloxane having up to 2 organic radicals per silicon atom wherein the organic radicals are each independently selected from the group consisting of hydrocarbon radicals delineated above for component (a) which are free of aliphatic unsaturation and substituted hydrocarbon radicals delineated above for component (a) which are free of aliphatic unsaturation.

Organohydrogenpolysiloxane component (b) consists of siloxane units selected from the group consisting of $H_2R''SiO_{1/2}$, $HR''_2SiO_{1/2}$, $R''_3SiO_{1/2}$, $HR''SiO_{2/2}$, $R''_2SiO_{2/2}$, $H_2SiO_{2/2}$, $HSiO_{3/2}$, $R''SiO_{3/2}$ and $SiO_{4/2}$ wherein each R" denotes independently an organic radical free of aliphatic unsaturation selected from the hydrocarbon and substituted hydrocarbon radicals delineated above. Preferred siloxane units in organohydrogenpolysiloxane component (b) include $Me_3SiO_{1/2}$, $PhMe_2SiO_{1/2}$, $HMe_2SiO_{1/2}$, $HPhMeSiO_{1/2}$, $Me_2SiO_{2/2}$, $Ph_2SiO_{2/2}$, $HMeSiO_{2/2}$, $HPhSiO_{2/2}$, $MeSiO_{3/2}$, $PhSiO_{3/2}$, $HSiO_{3/2}$, and $SiO_{4/2}$ siloxane units.

Organohydrogenpolysiloxane component (b) contains an average of at least two silicon-bonded hydrogen radicals per molecule of component (b) which are reactive in a platinum-catalyzed hydrosilylation reaction. Preferably organohydrogenpolysiloxane component (b) contains an average of at least two siloxane units per molecule of component (b) which bear silicon-bonded hydrogen radicals which are reactive in a platinum-catalyzed hydrosilylation reaction.

Some examples of organohydrogenpolysiloxane component (b) include components having the formulae $R''_3SiO(R''HSiO)_ySiR''_3$, $HR''_2SiO(R''_2SiO)_zSiR''_2H$, $HR''_2SiO(R''HSiO)_y(R''_2SiO)_zSiR''_2H$, $(HR''_2SiO)_4Si$, $(HR''_2SiO_{1/2})_y(SiO_{4/2})_z$, $(HR''SiO)_y$, $R''_3SiO(R''HSiO)_y(R''_2SiO)_zSiR''_3$ and $(R''_3SiO_{1/2})_v(R''HSiO_{2/2})_y(R''SiO_{3/2})_w(SiO_{4/2})_z$ wherein $\underline{v}$, $\underline{w}$, $\underline{y}$ and $\underline{z}$ each denote a positive integer.

For coating compositions the organohydrogenpolysiloxane component (b) is preferably a linear organohydrogenpolysiloxane having the formula $(CH_3)_3SiO[(CH_3)(H)SiO]_cSi(CH_3)_3$ wherein c denotes a number having an average value of from 30 to 70 or a mixture of at least 40 percent by weight of said linear organohydrogenpolysiloxane and the remainder of said organohydrogenpolysiloxane component (b) being a linear organohydrogenpolysiloxane having the formula $(CH_3)_3SiO[(CH_3)_2SiO]_d[(CH_3)(H)SiO]_eSi(CH_3)_3$ wherein d denotes a number having an average value of approximately 3 and e denotes a number having an average value of approximately 5.

Organohydrogenpolysiloxanes and methods for their preparation are well known in the organosilicon art and need no further delineation herein; many are commercially available. The practioner of average skill in the organosilicon polymer art knows or can easily determine how to prepare these organohydrogenpolysiloxanes.

Component (c) is a platinum-containing catalyst component which is effective to catalyze a hydrosilylation reaction of the aliphatically unsaturated radicals in component (a) with the silicon-bonded hydrogen radicals in component (b) at room temperature. Examples of platinum-containing catalyst that are effective in the present invention include chloroplatinic acid, platinum-on-charcoal and platinum chloride which has been complexed with one or more ligands.

A preferred platinum-containing catalyst (c) is disclosed in U.S. Patent No. 3,419,593 issued December 31, 1968, to Dow Corning Corporation, which shows the preparation and use of said catalyst component.

A highly preferred catalyst component disclosed by said patent is a reaction product of $H_2PtCl_6.6H_2O$ and $(CH_2{=}CH)(CH_3)_2SiOSi(CH_3)_2(CH{=}CH_2)$. For convenient handling and use said reaction product is preferably mixed with a low-viscosity polydiorganosiloxane fluid bearing an average of at least one aliphatically unsaturated radical per molecule.

Component (d) is an inhibitor component which is effective for reducing the rate of the platinum-catalyzed hydrosilylation reaction of the aliphatically unsaturated radicals with the silicon-bonded radicals at room temperature, thereby providing an initial period of little or no reaction for the mixture of (a) plus (b) plus (c) plus (d). For example, the pot life for a composition which is curable by way of said hydrosilylation reaction is thereby increased. As another example, the induction period of a composition which is polymerizable by way of said hydrosilylation reaction is thereby increased.

Inhibitor component (d) may be any of the well-known compounds that are disclosed in the organosilicon art as being useful for temporarily inhibiting the catalytic effect of the platinum-containing component (c). Some are known to be effective as an inhibitor as long as they remain in the composition; others are known to be effective as an inhibitor only for a limited period of time even though they are still present in the composition. The former compounds can be regarded as true inhibitors while the latter can be regarded as retarders. For the purposes of this invention both types of compound are encompassed by the inhibitor component (d).

Examples of inhibitor compounds which are suitable for use as component (d) in the compositions of this invention include the acetylenic compounds disclosed in U.S. Patent No. 3,445,420 issued May 20, 1969, to Dow Corning Corporation, the sulfoxides disclosed in U.S. Patent No. 3,453,234 issued July 1, 1969, to Dow Corning Corporation, the silazanes disclosed in U.S. Patent No. 3,453,233 issued July 1, 1969, to Dow Corning Corporation, the nitriles disclosed in U.S. Patent No. 3,344,111 issued September 26, 1967, to General Electric, benzotriazole as disclosed in U.S. Patent No. 3,192,181 issued June 29, 1965, to Dow Corning Corporation, and the nitrogen-containing compounds disclosed in U.S. Patent No. 3,188,299 issued June 8, 1965, to General Electric.

Compounds which are particularly effective inhibitors especially for coating composition, such as paper-coating compositions, which are typically thinly applied to a substrate are 1-chloro-2-butene, 3-chloro-1-butyne and 3-methyl-3-hydroxy-1-butyne (also called methylbutynol) and mixtures of two or three of said compounds.

Component (e) is an accelerator component which is effective for increasing the rate of the inhibited platinum-catalyzed hydrosilylation reaction of the aliphatically unsaturated radicals with the silicon-bonded hydrogen radicals at 180°F., thereby providing for a rapid reaction for the mixture of (a) plus (b) plus (c) plus (d) plus (e) at moderately elevated temperatures. For example, the cure time at 180°F for a composition which is curable by way of said inhibited hydrosilylation reaction is thereby decreased. As another example, the polymerization time at 180°F for a composition which is polymerizable by way of said inhibited hydrosilylation reaction is thereby decreased.

Accelerator component (e) can be any saturated halohydrocarbon which has an atmospheric boiling point of from 70°F to 250°F; however, chlorohydrocarbons are preferred.

Chlorohydrocarbons which are particularly effective accelerators, especially for coating compositions, such as paper-coating compositions which are typically thinly applied to a substrate, are n-propyl chloride, 1,1,1-trichloroethane and 1,1,1,3-tetrachloropropane, and mixtures of two or three of said chlorohydrocarbons.

The reactive compositions of this invention comprise an organopolysiloxane component (a) and an organohydrogenpolysiloxane component (b) taken in sufficient amounts so that the ratio of silicon-bonded hydrogen radicals in (b) to aliphatically unsaturated radicals in (a) has any value greater than zero, such as 0.001, 0.01, 0.1, 1.0, 10, 100 and 1000; however the value of said ratio typically is from 0.1 to 10.0 and should be from 0.9 to 2.1 for curable coating compositions.

The amount of platinum-containing component (c) to be used is not critically limited as long as it is sufficient to catalyze the reaction of aliphatically unsaturated radicals with silicon-bonded hydrogen radicals. As little as 1 part by weight of platinum is effective; however, for curable coating compositions the amount of platinum-containing component (c) to be used should be sufficient to provide from 50 to 250 parts by weight of platinum, all quantities taken with reference to one million parts by weight of organopolysiloxane component (a).

The amount of inhibitor component (d) to be used is not critically limited but will depend upon the particular inhibitor that is used. Typically inhibitor component (d) is present in an amount ranging from 0.01 to 1.0 parts by weight for every 100 parts by weight of component (a).

The amount of accelerator component (e) to be used is not critically limited but will depend upon the particular accelerator and inhibitor that are used. Typically accelerator component (e) is present in an amount ranging from 1 to 10 parts by weight for every 100 parts by weight of component (a).

A highly preferred composition of this invention comprises from 2 to 6 parts by weight of the accelerator 1,1,1,3-tetrachloropropane and either 0.02 to 0.1 parts by weight of the inhibitor 3-methyl-3-hydroxy-1-butyne or from 0.1 to 0.2 parts by weight of the inhibitor 1-chloro-2-butene for every 100 parts by weight of organopolysiloxane component (a).

The compositions of this invention can contain other components which are commonly used in curable organosilicon compositions provided they do not negate the slow room-temperature gelling and the fast heat-curing behavior of said composition. Examples of said other components include reinforcing and extending fillers, pigments, diluents, biocides, thickeners, flow-control additives and adhesive-release additives.

The compositions of this invention are obtained whenever components (a), (b), (c), (d) and (e) are mixed together in the indicated amounts. The order of mixing is not critical; however, it is preferred that the platinum-containing component (c) be mixed with the organohydrogenpolysiloxane component (b) and inhibitor component (d) in a final mixing step. Conveniently, the curable coating compositions of this invention are prepared by mixing two premixed packages, a first package comprising a portion of component (a), all of component (c) and all of component (e) and a second package comprising the balance of component (a), all of component (b) and all of component (d). Alternatively, component (d) can be placed in the first package instead of the second package. Other alternative combinations are obvious and can be equally useful.

The reactive compositions of this invention have various reactivities and range from compositions which react to achieve an increase in molecular weight of components (a) and (b), i.e. polymerization, to compositions which react to achieve a formation of a three dimensional, highly crosslinked reaction product of components (a) and (b), i.e. curing. The extent of curing will vary directly with the number of aliphatically unsaturated radicals per molecule of (a) plus the number of silicon-bonded hydrogen radicals per molecule of (b).

The curable compositions of this invention have many uses, such as insulating, encapsulating and coating.

The present invention thus relates to a process comprising preparing the reactive compositions of this invention, configuring said reactive composition before it reacts completely and heating the configured composition to accelerate the reaction thereof. By configuring it is meant any of positioning, coating, shaping, filling, extruding, impregnating, flowing, spraying and the like. Heating can be accomplished by any means such as by radiant heating, hot air heating, contact heating and steam heating.

The present invention relates particularly to a method for coating a substrate, said method comprising preparing a curable composition of this invention, applying said curable composition to said substrate and heating to cure the applied curable composition. The substrate to be coated can be any substrate that does not poison, i.e. prevent, the curing reaction. Examples of said substrate include metal substrates, such as aluminum, titanium, copper, steel, silver, tin and their alloys; cellulose substrates; such as paper, cardboard and wood; siliceous substrates, such as concrete, plaster, porcelain, glass, mortar and ceramics; and synthetic polymeric substrates such a polyolefins, polycarbonates, polyacylates, polystyrenes and their copolymers.

With respect to the paper-coating art the method of this invention advantageously comprises preparing a quantity, such as a two-hour quantity, of a curable coating composition of this invention,

preferably at a temperature of from 40° to 70°F., applying the coating composition to a paper substrate, such as kraft paper, clay-coated paper or polyethylene-coated paper, in a continuous process over a period of time, using a blade coater, and heating the paper as it is coated to at least 180°F. for a sufficient period of time to cure the applied composition. Advantageously, the curable coating composition to be coated remains usable over the entire production run time period and yet cures rapidly, for example within 60 seconds, when applied to the paper and heated. The paper containing the cured coating can then be immediately or eventually further processed, as desired, such as stored, coated with an adhesive, cut, rolled or formed.

The following examples are disclosed to further illustrate, but not limit, the present invention. All amounts and percentages are by weight unless otherwise specified. Herein, Me denotes the methyl radical and Vi denotes the vinyl radical.

Cure time of a curable paper-coating composition was measured by applying the composition to a 8 1/2" x 11" piece of kraft paper using a Time-Life® blade coater at a blade pressure of 34 pounds per square inch to provide a coated paper having approximately 0.5 pound of coating per ream (0.8 $g/m^2$) of paper and immediately placing the coated paper in a 180°F (82°C) forced-air oven for a known

period of time, e.g. 30 seconds. The coated and heated paper was then removed from the oven and the coating was examined for smear, rub-off and migration as described below. This coating and heating process was repeated, as many times as was needed, utilizing a 5-second shorter or longer heating period than the previous test, until the cure time, i.e. the minimum time that was needed to provide a coating on the paper that displayed no smear, no rub-off and no migration, was determined.

Smear of a paper-coating was measured by lightly rubbing the applied and heated coating with a finger and looking for hazing of the coating; no hazing means no smear.

Rub-off of a paper-coating was measured by vigorously rubbing the applied and heated coating with a finger, trying to remove the coating from the paper; no removal means no rub-off.

Migration of a paper-coating was measured by placing a test strip of No. 5910 3M® brand transparent tape on the applied and heated coating, adhesive-bearing surface in contact with the coating, and rubbing the strip 5 to 10 times with a finger to adhere it to the coating. The strip of transparent tape was then removed from the coating and its adhesive-bearing surface was double onto itself and pressed firmly together. The force needed to separate the doubled test strip was then compared to the force

needed to separate a doubled strip of fresh tape and rated as no-less-than, slightly-less-than, moderately-less-than or grossly-less-than, and the migration of the coating was correspondingly rated, i.e. no-, slight-, moderate- or gross-migration.

Gel time, i.e. pot life, of a curable paper-coating composition, at any particular temperature, was determined by measuring the time that was needed for the viscosity of the composition to become twice as viscous as the viscosity of the composition immediately after being mixed at said temperature. A Brookfield® viscometer, Model RVF, fitted with a No. 8 spindle was used to measure viscosity.

Adhesive release of a paper-coating composition was measured by coating kraft paper, as noted above for cure time determinations, heating the coated paper at 180°F for 50 seconds to cure the coating and proceeding as follows. The cured coating was aged at 70°F for 24 hours and then coated with adhesive using a solution of Monsanto GMS-263 acrylic adhesive applied to the cured coating at a wet thickness of 3 mils (76.2 μm) using a Bird Bar. The applied adhesive was air-dried at room temperature for 1 minute, heated at 65°C. for 1 minute and then cooled to room temperature again for 1 minute. A sheet of 60 pound Matte Litho was applied to the 1-mil-thick dried adhesive and the resulting laminate was pressed through two rolls of an off-set printer and aged for 20 hours at 70°C.

Release testing of the laminates was accomplished by cooling the aged laminates to room temperature for 4 hours, cutting the cooled laminates into 25.4 mm wide strips, and pulling the Matte/adhesive lamina from the Kraft paper/coating lamina at an angle of 180° ($\pi$ radians) at 400 inches/minutes (0.17 m/s). The force, in grams per inch, that was required to separate the laminae was noted and was converted to newtons per meter (N/m) for this disclosure by multiplying by 0.3860886 and rounding off.

Examples 1 to 13

In these examples and controls a curable organopolysiloxane paper-coating composition having the following formulation was used.

(a) 100 parts $ViMe_2SiO(Me_2SiO)_{41}(MeViSiO)_{0.8}SiMe_2Vi$

(b) 2.0 parts $Me_3SiO(MeHSiO)_{50}SiMe_3$

(b) 2.8 parts $Me_3SiO(Me_2SiO)_3(MeHSiO)_5SiMe_3$

(c) 2.4 parts hydrosilylation catalyst.

The hydrosilylation catalyst was prepared as described in U.S. Patent No. 3,419,593 and contained 0.6 percent platinum in the form of $H_2PtCl_6 \cdot 6H_2O$ reacted with $(ViMe_2Si)_2O$ and dissolved in $ViMe_2SiO(Me_2SiO)_{150}$-$SiMe_2Vi$. The above curable composition contained 144

parts Pt, per one million parts of component (a), and 1.3 silicon-bonded hydrogen radicals for every silicon-bonded vinyl radical. The vinyl-radical contribution of component (c) is negligible and was neglected.

The compositions listed in Table I, either controls, which were free of intentionally added inhibitor and accelerator or comprising only intentionally added inhibitor or accelerator and examples of this invention, which comprised intentionally added inhibitor and accelerator, were prepared by (1) mixing the indicated inhibitor and indicated amount with the 4.8 parts of premixed hydrogen-radical-containing polymers, (2) mixing the indicated accelerator and indicated amount and the 2.4 parts of platinum-containing catalyst with the 100 parts of vinyl-radical-containing polymer, (3) adjusting the temperatures of the two resulting mixtures to 25°C. and then (4) mixing the two mixtures.

Cure time at 180°F and gel time at room temperature were measured immediately for each composition, as described above. Note that the compositions of this invention have the desirable combination of long gel times, similar to those of the inhibited controls, and short 180°F cure times, similar to that of the uninhibited control. The adhesive release of the compositions of Examples 4 to 7 was 58 N/m.

<u>Examples 14 to 21</u>

These examples, summarized in Table II, illustrate the added usefulness of the present invention that is available by preparing and maintaining the paper-coating compositions of this invention at 5°C. before applying them to paper.

In Examples 14 to 19 the curable paper-coating compositions were prepared as described in Examples 1 to 13, except that the final mixing temperature was either 5°C or 25°C.

In Examples 20 and 21 the curable paper-coating compositions were prepared as described in Examples 1 to 13 except 1.6 parts, instead of 2.4 parts, of the hydrosilylation catalyst was used. Additionally, the inhibitor and the accelerator were mixed and the resulting mixture was mixed with the vinyl-radical-containing copolymer before the hydrogen-radical-containing polymers were mixed therewith, at either 5°C or 25°C.

Note that the compositions of this invention possess and retain shorter 180°F cure times when they are prepared and maintained at 5°C instead of 25°C.

The composition of Examples 14 to 20 had a room temperature gel time of 120 minutes. The composition of Example 21 had a room temperature gel time of 90 minutes.

Example 22

A curable organopolysiloxane paper-coating composition was used in this example that was similar to that described in Examples 1 to 13, varying therefrom only in that 4.0 parts of the hydrogen-radical-containing polymer having the average formula $Me_3SiO(MeHSiO)_{50}SiMe_3$ was used as the only source of silicon-bonded hydrogen radicals. Such a composition had a room temperature gel time of 2 minutes and a 180°F cure time of less than 45 seconds immediately after being prepared.

When 0.2 parts of the inhibitor $ClCH_2CH{=}CHCH_3$ was incorporated into this curable composition by mixing it with the hydrogen-radical-containing polymer, the room-temperature gel time of the composition was desirably increased to 120 minutes. However, the 180°F cure time was increased to 300 seconds, a cure time undesirably long for paper-coating processes.

When 0.2 parts of the inhibitor $ClCH_2CH{=}CHCH_3$ and 3.0 parts of the accelerator $CH_3CH_2CH_2Cl$ were incorporated into the curable composition, by mixing the former with the hydrogen-radical-containing polymer and the latter with the mixture of platinum-containing component and

vinyl-radical-containing component (a), the resulting composition of this invention had a room temperature gel time of 60 minutes and a 180°F cure time of 65 seconds immediately after being prepared; a very useful composition for paper-coating processes.

Examples 23 to 25

A cure-modifying composition was prepared by thoroughly mixing 5000 parts of the accelerator $CCl_3CH_2CH_2Cl$ and 58 parts of the inhibitor $(CH_3)_2C(OH)C{\equiv}CH$. This mixture was incorporated, at 25°C., in various concentrations into the curable paper-coating composition described in Examples 1 to 13, by mixing it with the vinyl-radical-containing component (a) before the premixed hydrogen-radical-containing components (b) were mixed therewith. The room temperature gel time of the resulting control composition and three compositions of this invention ranged from 1 minute (control) to 20 minutes to 120 minutes to 150 minutes as the amount of cure-modifying composition was varied from 0 (control) to 2 to 4 to 5 parts, respectively. In each of the four compositions the 180°F cure time was found to be 30 seconds when measured immediately after the compositions were prepared.

Example 26

When Example 18 was repeated, with the exception that 1 part of the accelerator $CH_3CH_2CH_2Br$ was used instead of 3 parts of $CH_3CH_2CH_2Cl$, and the inhibitor $ClCH_2CH{=}CHCH_3$ was mixed with the vinyl-radical-containing copolymer instead of the hydrogen-radical-containing polymers, a composition

having a 180°F cure time of 60 seconds and a room temperature gel time of 90 minutes was obtained. Omission of the accelerator $CH_3CH_2CH_2Br$ from the composition of this example provided a composition having a 180°F cure time exceeding 300 seconds and a room temperature gel time of 120 minutes.

Examples 27 to 34

In these examples and controls the curable paper-coating composition was the same as that described in Examples 1 to 13 except that the amount of platinum-containing component was varied from 4.0 to 0.8 parts as noted in Table III. The compositions of this invention contained 0.16 parts of $ClCH_2CH{=}CHCH_3$ as an inhibitor and 3.0 parts of $Cl_3CH_2CH_2Cl$ as an accelerator. The controls were free of intentionally added inhibitor and accelerator, except as noted for controls xv. and xvi. Note that this invention is effective for compositions having a wide range of platinum-catalyst concentration. The adhesive release of these coating compositions ranged from 58 to 77 N/m.

Examples 35 and 36

When Example 14 was twice repeated, except 0.16 and 0.12 parts, respectively, of the inhibitor $ClCH_2CH=CHCH_3$ were used instead of 0.20 parts, the resulting compositions of this invention had 180°F cure times of 30 seconds and 25 seconds, respectively, and room temperature gel times of 60 minutes and 15 minutes, respectively.

Examples 37 to 40

These examples show the preparation of the compositions of this invention in a solvent. The compositions were prepared as described in examples 20 and 21 except that the premix of accelerator and inhibitor, detailed in Table IV, was mixed with the hydrogen-radical-containing polymers instead of the vinyl-radical-containing polymer. To measure cure rate the heptane-containing coating compositions were coated onto paper with a No. 12 Mayer rod instead of the above-described Time-Life® Blade Coater. Note that the presence of a solvent does not effect the 180°F cure time of the composition of this invention.

Examples 41 to 44

A cure-modifying composition was prepared by mixing 5000 parts of $CH_3CH_2CH_2Cl$ and 58 parts of $(CH_3)_2C(OH)C{\equiv}CH$. This mixture was mixed, at 25°C., in various concentrations with the curable paper-coating composition described in Examples 21 and 22 except that the cure-modifying composition was mixed with either the vinyl-radical-containing component (a) or the mixture of hydrogen-radical-containing components (b) as noted in Table V.

Example 45

A curable composition was prepared by mixing 100 parts of the organopolysiloxane component (a) and 1.6 parts of the platinum-containing component described in Examples 1 to 13, 0.2 parts of 1-chloro-2-butene and 9.8 parts of an organohydrogenpolysiloxane component consisting essentially of $(CH_3)_3SiO_{1/2}$ siloxane units, $(CH_3)(H)SiO_{2/2}$ siloxane units and $SiO_{4/2}$ siloxane units. The resulting mixture had approximately 0.8 silicon-bonded hydrogen radicals for every silicon-bonded vinyl radical, a room temperature pot life of more than 480 minutes and a 180°F cure time of 150 seconds. When 3 parts of 1,1,1,3-tetrachloropropane was mixed with the curable composition the 180°F cure time was decreased to 55 seconds and the room temperature pot life still exceeded 480 minutes.

Table I

| Reference Number | Inhibitor | | Accelerator | | 180°F Cure Time seconds | Room Temp. Gel Time Minutes |
|---|---|---|---|---|---|---|
| | No.(1) | Parts | No.(2) | Parts | | |
| Control i | None | | None | | 30 | 1 |
| Control ii | None | | I | 3 | 40 | 4 |
| Control iii | None | | II | 1 to 5 | 30 | 3 |
| Control iv | None | | III | 6 | --- | 2 |
| Control v | A | 0.2 | None | | 125 | 120 |
| Example 1 | A | 0.2 | I | 1 | 65 | 120 |
| Example 2 | A | 0.2 | I | 2 | 60 | 120 |
| Example 3 | A | 0.2 | I | 3 | 35 | 120 |
| Example 4 | A | 0.2 | II | 1 | 60 | 120 |
| Example 5 | A | 0.2 | II | 2 | 45 | 120 |
| Example 6 | A | 0.2 | II | 3 | 45 | 120 |
| Example 7 | A | 0.2 | II | 4 | 60 | 120 |

(1) A denotes $ClCH_2CH=CHCH_3$;

(2) I denotes $CH_3CH_2CH_2Cl$; II denotes $CCl_3CH_2CH_2Cl$; III denotes $CCl_3CH_3$.

Table I (con't)

| Reference Number | Inhibitor No.(1) | Inhibitor Parts | Accelerator No.(2) | Accelerator Parts | 180°F Cure Time seconds | Room Temp. Gel Time Minutes |
|---|---|---|---|---|---|---|
| Control vi | B | 0.1 | None | | 225 | 240 |
| Example 8 | B | 0.1 | I | 3 | 45 | 300 |
| Example 9 | B | 0.1 | II | 2 | 120 | 300 |
| Example 10 | B | 0.1 | II | 3 | 120 | 300 |
| Example 11 | B | 0.1 | II | 4 | 45 | 300 |
| Control vii | C | 0.07 | None | | $>$300 | $>$480 |
| Example 12 | C | 0.07 | II | 5 | 30 | 150 |
| Example 13 | C | 0.07 | III | 6 | 60 | $>$480 |

(1) B denotes $CH{\equiv}CCHClCH_3$; C denotes $(CH_3)_2C(OH)C{\equiv}CH$.

(2) I denotes $CH_3CH_2CH_2Cl$; II denotes $CCl_3CH_2CH_2Cl$; III denotes $CCl_3CH_3$.

Table II

| Example Number | Inhibitor No.(1) | Inhibitor Parts | Accelerator No.(2) | Accelerator Parts | Coating Composition Age, min. | Coating Composition Temp., °C. | 180°F Cure Time seconds |
|---|---|---|---|---|---|---|---|
| 14 | A | 0.2 | I | 3 | 0 | 25 | 45 |
| 15 | A | 0.2 | I | 3 | 30 | 25 | 195 |
| 16 | A | 0.2 | I | 3 | 60 | 25 | 200 |
| 17 | A | 0.2 | I | 3 | 0 | 5 | 40 |
| 18 | A | 0.2 | I | 3 | 30 | 5 | 40 |
| 19 | A | 0.2 | I | 3 | 60 | 5 | 60 |
| 20 | C | 0.05 | II | 3.95 | 0 | 25 | 55 |
| 21 | C | 0.04 | II | 3.96 | 0 | 5 | 30 |

(1) A denotes $ClCH_2CH=CHCH_3$; C denotes $(CH_3)_2C(OH)C\equiv CH$.

(2) I denotes $CH_3CH_2CH_2Cl$; II denotes $CCl_3CH_2CH_2Cl$.

Table III

| Reference Number | Catalyst Parts | Catalyst PPM Pt | 180°F Cure Time seconds | Room Temp. Gel Time minutes |
|---|---|---|---|---|
| Example 27 | 4.0 | 240 | 15 | 3 |
| Control viii | 4.0 | 240 | (1) | (1) |
| Example 28 | 3.3 | 200 | 15 | 5 |
| Control ix | 3.3 | 200 | (1) | (1) |
| Example 29 | 2.8 | 168 | 20 | 10 |
| Control x | 2.8 | 168 | (1) | (1) |
| Example 30 | 2.4 | 144 | 20 | 30 |
| Control xi | 2.4 | 144 | 30 | 1 |
| Example 31 | 2.0 | 120 | 40 | 60 |

(1) Curing reaction was too rapid to permit measurement of 180°F cure time and room temperature gel time.

Table III - Cont.

| Reference Number | Catalyst Parts | Catalyst PPM Pt | 180°F Cure Time seconds | Room Temp. Gel Time minutes |
|---|---|---|---|---|
| Example 32 | 1.6 | 96 | 50 | 120 |
| Control xii | 1.6 | 96 | 60 | 2 |
| Example 33 | 1.2 | 72 | 80 | 210 |
| Control xiii | 1.2 | 72 | 120 | 2 |
| Example 34 | 0.8 | 48 | > 300 | 300 |
| Control xiv | 0.8 | 48 | 300 | 5 |
| Control xv (2) | 2.4 | 144 | 60 | 10 |
| Control xvi (3) | 2.4 | 144 | 300 | --- |

(2) Contains 0.2 parts of the inhibitor $ClCH_2CH{=}CHCH_3$.

(3) Contains 0.1 part of the inhibitor $ClCH_2CH{=}CHCH_3$.

Table IV

| Example Number | Inhibitor No.(1) | Inhibitor Parts | Accelerator No.(2) | Accelerator Parts | 180°F Cure Time Seconds | Room-Temp. Gel Time Minutes |
|---|---|---|---|---|---|---|
| 37 | C | 0.08 | II | 3.92 | 50 | 300 |
| 38 (3) | C | 0.08 | II | 3.92 | 50 | 1440 |
| 39 | A | 0.2 | II | 2.0 | 50 | 90 |
| 40 (3) | A | 0.2 | II | 2.0 | 50 | 1440 |

(1) A denotes $ClCH_2CH{=}CHCH_2$; C denotes $(CH_3)_2C(OH)C{\equiv}CH$.

(2) II denotes $CCl_3CH_2CH_2Cl$

(3) Contains 900 parts of heptane.

Table V

| Reference Number | Cure-Modifying Composition Parts | Cure-Modifying Composition Location | 180°F Cure Time Seconds | Room Temp. Gel Time Minutes |
|---|---|---|---|---|
| 41 | 4 | Component (a) | 180 | 300 |
| 42 | 3 | Component (a) | 95 | 90 |
| 43 | 2 | Component (a) | 60 | 30 |
| 44 | 4 | Component (b) | 120 | 300 |

Claims:

1. A reactive composition obtained by mixing components comprising

(a) an organopolysiloxane component having from 1 to 3 organic groups per silicon atom, the organic radicals of which are independently selected from the group consisting of hydrocarbon radicals and substituted hydrocarbon radicals, at least two of said organic radicals per molecule of said organopolysiloxane bearing aliphatic unsaturation which is reactive in a platinum-catalyzed hydrosilylation reaction,

(b) an organohydrogenpolysiloxane component having up to 2 organic radicals per silicon atom, the organic radicals of which are free of aliphatic unsaturation and are independently selected from the group consisting of hydrocarbon radicals and substituted hydrocarbon radicals, there being an average of at least two silicon-bonded hydrogen radicals per molecule of said organohydrogenpolysiloxane which are reactive in a platinum-catalyzed hydrosilylation reaction,

(c) a platinum-containing component in sufficient amount to catalyze a hydrosilylation reaction of said aliphatically unsaturated radicals with said silicon-bonded hydrogen radicals,

(d) an inhibitor component in sufficient amount to decrease the rate of the catalyzed hydrosilylation reaction at room temperature, and characterized in that the components so mixed include

(e) an accelerator component in sufficient amount to increase the rate of the inhibited hydrosilylation reaction at 180°F., said accelerator component being selected from the group consisting of saturated halohydrocarbons having an atmospheric boiling point of from 75°F to 250°F.

2. A curable coating composition obtained by mixing components comprising

(a) an organopolysiloxane component having the formula $(CH_2{=}CH)(CH_3)(R')SiO[(CH_3)_2SiO]_a$-$[(CH_2{=}CH)(CH_3)SiO]_bSi(R')(CH_3)(CH{=}CH_2)$ wherein each R' denotes, independently, a methyl radical or a phenyl radical, $\underline{a}$ denotes a number having an average value of from 40 to 600 and $\underline{b}$ denotes a number having an average value of from 0 to 0.1$\underline{a}$,

(b) an organohydrogenpolysiloxane component consisting essentially of at least 40 percent by weight of an organohydrogenpolysiloxane having the formula $(CH_3)_3SiO[(CH_3)(H)SiO]_cSi(CH_3)_3$

wherein c denotes a number having an average value of from 30 to 70, the remainder of said organohydrogenpolysiloxane component consisting essentially of an organohydrogenpolysiloxane having the formula $(CH_3)_3SiO[(CH_3)_2SiO]_d$-$[(CH_3)(H)SiO]_eSi(CH_3)_3$ wherein d denotes a number having an average value of approximately 3 and e denotes a number having an average value of approximately 5,

(c) a platinum-containing component comprising the reaction product of $H_2PtCl_6 \cdot 6H_2O$ with $[(CH_2{=}CH)(CH_3)_2Si]_2O$, said platinum-containing component being present in sufficient amount to provide from 50 to 250 parts by weight of platinum for every one million parts by weight of the organopolysiloxane component (a),

(d) an inhibitor component in sufficient amount to increase the room-temperature gel time of the mixture of components (a) plus (b) plus (c) and characterized in that the components so mixed include

(e) an accelerator component in sufficient amount to decrease the cure time of the mixture of components (a) plus (b) plus (c) plus (d) at 180°F., said accelerator component being selected

from the group consisting of saturated halohydrocarbons having an atmospheric boiling point of from 70°F. to 250°F., there being in the resulting mixture from 0.9 to 2.1 silicon-bonded hydrogen radicals for every silicon-bonded vinyl radical.

3. A composition according to claims 1 or 2 wherein from 0.01 to 1.0 parts by weight of the inhibitor component is mixed for every 100 parts by weight of component (a) and is selected from the group consisting of 1-chloro-2-butene, 3-chloro-1-butyne, 3-methyl-3-hydroxy-1-butyne and mixtures thereof.

4. A composition according to claim 3 wherein from 1 to 10 parts by weight of the accelerator component is mixed for every 100 parts by weight of component (a), said accelerator component being selected from the group consisting of 1-chloropropane, 1,1,1,3-tetrachloropropane, 1,1,1-trichloroethane and mixtures thereof.

5. A method for forming a configuration characterized by

(i) mixing components comprising

(a) an organopolysiloxane component having from 1 to 3 organic radicals per silicon atom, the organic radicals of which are independently selected from the group consisting of hydrocarbon radicals and substituted hydrocarbon radicals, at least two of said organic radicals per molecule of said organopolysiloxane bearing aliphatic unsaturation which is reactive in a platinum-catalyzed hydrosilylation reaction,

(b) an organohydrogenpolysiloxane component having up to 2 organic radicals per silicon atom, the organic radicals of which are free of aliphatic unsaturation and are independently selected from the group consisting of hydrocarbon radicals and substituted hydrocarbon radicals, there being an average of at least two silicon-bonded hydrogen radicals per molecule of said organohydrogenpolysiloxane which are reactive in a platinum-catalyzed hydrosilylation reaction,

(c) a platinum-containing component in sufficient amount to catalyze a hydrosilylation reaction of said aliphatically unsaturated radicals with said silicon-bonded hydrogen radicals,

(d) an inhibitor component in sufficient amount to decrease the rate of the catalyzed hydrosilylation reaction at room temperature, and

(e) an accelerator component in sufficient amount to increase the rate of the inhibited hydrosilylation reaction at 180°F., said accelerator component being selected from the group consisting of saturated halohydrocarbons having an atmospheric boiling point of from 75°F. to 250°F., to provide a reactive composition,

(ii) configuring the composition of (i) in a desired configuration, and

(iii) heating the configured composition to accelerate said hydrosilylation reaction.

6. A method for coating a substrate, said method characterized by

(i) mixing components comprising

(a) an organopolysiloxane component having the formula $(CH_2=CH)(CH_3)(R')SiO[(CH_3)_2SiO]_a$-$[(CH_2=CH)(CH_3)SiO]_bSi(R')(CH_3)(CH=CH_2)$ wherein each R' denotes, independently, a methyl radical or a phenyl radical, a denotes a number having an average value of from 40 to 600 and b denotes a number having an average value of from 0 to 0.1a,

(b) an organohydrogenpolysiloxane component consisting essentially of at least 40 percent by weight of an organohydrogenpolysiloxane having the formula $(CH_3)_3SiO[(CH_3)(H)SiO]_cSi(CH_3)_3$ wherein c denotes a number having an average value of from 30 to 70, the remainder of said organohydrogenpolysiloxane component consisting essentially of an organohydrogenpolysiloxane having the formula $(CH_3)_3SiO[(CH_3)_2SiO]_d[(CH_3)(H)SiO]_eSi(CH_3)_3$ wherein d denotes a number having an average value of approximately 3 and e denotes a number having an average value of approximately 5,

(c) a platinum-containing component comprising the reaction product of $H_2PtCl_6 \cdot 6H_2O$ with $[(CH_2{=}CH)(CH_3)_2Si]_2O$, said platinum-containing component being present in sufficient amount to provide from 50 to 250 parts by weight of platinum for every one million parts by weight of the organopolysiloxane component (a),

(d) an inhibitor component in sufficient amount to increase the room-temperature gel time of the mixture of components (a) plus (b) plus (c) and

(e) an accelerator component in sufficient amount to decrease the cure time of the mixture of components (a) plus (b) plus (c) plus (d) at 180°F., said accelerator component being selected from the group consisting of saturated halohydrocarbons having an atmospheric boiling point of from 70°F to 250°F., there being in the resulting mixture from 0.9 to 2.1 silicon-bonded hydrogen radicals for every silicon-bonded vinyl radical, to provide a curable composition,

(ii) applying said curable composition to said substrate, and

(iii) heating the applied composition to cure said applied composition.

7. A method according to claims 5 or 6, wherein from 0.01 to 1.0 parts by weight of the inhibitor component is mixed for every 100 parts by weight of component (a) and is selected from the group consisting of 1-chloro-2-butene, 3-chloro-1-butyne, 3-methyl-3-hydroxy-1-butyne and mixtures thereof.

8. A method according to claim 7 wherein from 1 to 10 parts by weight of the accelerator component is mixed for every 100 parts by weight of component (a), said accelerator component being selected from the group consisting of 1-chloropropane, 1,1,1,3-tetrachloropropane, 1,1,1-tetrachloroethane and mixtures thereof.

9. A method according to claim 6 wherein the inhibitor component consists of either from 0.02 to 0.1 parts by weight of 3-methyl-3-hydroxy-1-butyne or from 0.1 to 0.2 parts by weight of 1-chloro-2-butene, and the accelerator component consists of from 2 to 6 parts by weight of 1,1,1,3-tetrachloropropane, each amount taken with reference to 100 parts by weight of component (a).

10. A method according to claim 9 wherein the substrate is selected from the group consisting of paper, clay-coated paper, polyolefin-coated paper and polyolefin film.

0051384

European Patent Office

# EUROPEAN SEARCH REPORT

Application number
EP 81 30 4898.0

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| Y | FR - A1 - 2 339 650 (SHIN-ETSU CHEMICAL CO. LTD.) * page 1, line 1 to page 3, line 3; page 6, lines 8 to 16 * -- | 1,2 | C 08 G 77/20<br>C 08 G 77/12<br>C 08 L 83/04<br>C 09 D 3/00<br>C 09 D 3/82<br>D 21 H 1/40 |
| Y | Patents Abstracts of Japan Vol. 1, No. 27, 28 March 1977 page 1237C76 & JP - A - 51 - 139854 -- | 1,2 | TECHNICAL FIELDS SEARCHED (Int.Cl. 3) |
| D,A | US - A - 3 445 420 (G.J. KOOKOOTSEDES et al.) * claims 1,2 * -- | 1-3 | C 08 G 77/00<br>C 08 L 83/04<br>C 09 D 3/00<br>D 21 H 1/40 |
| D,L | US - A - 3 383 356 (J.M. NIELSEN) * claim 4; column 1, line 57 to column 2, line 4 * -- | 1,2-4 | |
| A | US - A - 3 989 668 (C.-L. LEE et al.) * column 3, lines 8 to 26 * -- | 2,6 | |
| A | DE - B2 - 2 210 380 (DOW CORNING LTD.) * claim 1; example 1 * ---- | 6,10 | CATEGORY OF CITED DOCUMENTS<br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| X | The present search report has been drawn up for all claims | | &: member of the same patent family, corresponding document |

| Place of search | Date of completion of the search | Examiner |
|---|---|---|
| Berlin | 21-01-1982 | IDEZ |

EPO Form 1503.1 06.78